# EUROPEAN PATENT APPLICATION

(11) **EP 4 201 190 A1**
(43) Date of publication of application: **28.06.2023**
(21) Application number: 22195760.8
(22) Date of filing: 15.09.2022
(51) Int. Cl.: A01D 41/127, G06Q 50/02, G06Q 10/04, H04W 4/02

(54) **ROW POSITION MAPPING OF AN AGRICULTURAL IMPLEMENT**

(30) Priority: 22.12.2021 US 202163265890 P
(71) Applicant: Agco Corporation, Duluth, Georgia 30096 (US)
(72) Inventor: BRINKER, Jarrett Lee, Hesston, 67062-0969 (US); FIGGER, Robert L., Hesston (US)
(74) Representative: AGCO Intellectual Property Department

(57) **Abstract**

Described herein are technologies for mapping sensed positions of operative rows of an agricultural implement, such as when the implement moves through a crop field. The technologies include a method including (1) sensing a position of an operative row at a geographic location of the field, (2) matching the location of the field with a position in a map of the field corresponding to the location, and (3) associating the sensed position of the row to the position in the map. In some embodiments, the method includes repeating the aforesaid operations for multiple geographic locations of the field and rendering an image of the map to be displayed in a GUI. Also, in some embodiments, the method includes rendering the image of the map with an image of a yield map of the field. In some embodiments, the method includes generating a topographic map based on the sensed row positions.

## Description

### TECHNICAL FIELD

The present disclosure relates to mapping parameters of agricultural implements in a digital geographic map.

### BACKGROUND

Yield mapping is well known in agriculture. Yield mapping can use global positioning system (GPS) data to analyze variables in a crop field, such as crop yield. Yield mapping can also use GPS data to analyze variables such soil quality, soil moisture, soil pH-level, crop or carbon density, and topography of a crop field. The variables can be analyzed via generation and study of maps, including agriculture informational maps that include soil quality maps, soil moisture maps, soil pH-level maps, crop or carbon density maps, and topographic maps.

Yield mapping was first developed about forty years ago and, in addition to using GPS data and technology, yield mapping can leverage sensors in the field and on agricultural machines and equipment to discover useful information. Often, the sensors can include speedometers, to track crop yields via grain elevator speed or combine speed. The sensors can also include a camera or another type of optical instrument. The sensors can also include a moisture sensor, a pH-level sensor, a position sensor, a linear displacement sensor, an angular displacement sensor, a pressure sensor, a load cell, or other sensors useable to sense a physical attribute of an agricultural machine or physical properties of the crop field.

The data produced from the GPS and one or more sensors can be used as input to generate yield maps that can be used to compare things such as yield distribution within the field from year to year as well as comparing crop yield to other factors. This allows farmers to determine areas of concern in the field and improve farming practices or at least change field-management accordingly. This can help with developing nutrient strategies as well as record critical information for securing loans or selling or renting land, for example.

### SUMMARY

Described herein are systems and methods (techniques) for mapping row position of agricultural implements to be rendered in a digital geographic map that can be displayed via a graphical user interface (GUI). For example, described herein are systems and methods (techniques) for mapping row position of planters to be rendered in a digital geographic map that can be displayed via a GUI.

In some embodiments, the implement is or includes a planter (such as a momentum planter) that has the unique ability to move a toolbar and row units of the toolbar as the row units start to run out of travel. An important feature of at least some of the systems described herein is a configuration to measure row position at multiple rows across the toolbar. This allows farmers to plant fields in paths effectively without losing ground contact or bottoming out row units.

Also, the toolbar can be or include a vertical contouring toolbar (VCT), which maintains an enhanced position for row units in the center of the parallel linkage's range of motion, level to the soil. In some examples, with almost 16 inches more row unit travel than more conventional implement toolbars, a VCT can provide 65.9 inches of row unit travel or possibly more. With the advantages of the VCT, how can a farmer or implement operator tell how good of job the VCT is doing and help explain why there are skips in the field post emergence or excess margin on the gage wheels. Such problems can be resolved by generating a map of row position that can inform users of the position of each row unit (which is equipped with a position sensor) while the implement is being used in a crop field.

Using a row position map and in some embodiments correlating it to a toolbar position map or a yield map, the row position map can inform a farmer or implement operator if the rows (and in some embodiments, the toolbar) are in an effective position at different parts of the field. If terrain exists so that the vertical change is greater than the row travel across the toolbar, an operator may be unable to move the toolbar in position to keep the rows in the ground or keep them from bottoming out. The techniques described herein can limit such a problem. And, in turn, such a technical advancement could be part of path planning for the next year.

In some of the embodiments, the implement has a rotary sensor connected to multiple row parallel links of a row unit that can provide information to a computing system of where the operative row is at while the implement moves through a crop field. In some other embodiments, the rotary sensor is replaced with an accelerometer based sensor or an inclinometer and such a sensor is connected to multiple row parallel links of a row unit and can provide information to a computing system of where the operative row is at while the implement moves through a crop field. Such information can be used for setting variables of operation of the row or the toolbar. Creating a map of where each row is while planting would allow an operator or farmer to gather data and provide agronomic insight into why the implement may be operating poorly and help improve its operation in future years. It could help explain loss of ground contact or excess margin from a row unit running out of travel. Comparing the row position map across a toolbar section can inform an operator if an implement is operating effectively, which can assist in maximizing yields and minimizing loss of ground contact. The generation of such a map also can be used to derive a topographical map. Also, the technologies described herein could be a solution for planters as an aftermarket kit to show when rows are not in effective positions for planting (e.g., to limit problems such as rows out of the ground or bottomed out).

In summary, described herein are technologies for mapping sensed positions of adjustable operative rows (i.e., adjustable row units) of an agricultural implement, such as when the implement moves through a crop field. The technologies include a method including (1) sensing a position of an operative row (i.e., a row unit) at a geographic location of the crop field, (2) matching the location of the field with a position in a map of the field corresponding to the geographic location, and (3) associating the sensed position of the operative row to the position in the map. In some embodiments, the method includes repeating the aforesaid operations for multiple geographic locations of the field and rendering an image of the map to be displayed in a GUI. Also, in some embodiments, the method includes rendering the image of the map with an image of a yield map of the field. In some embodiments, the method includes generating a topographic map based on the sensed row positions. Also, in some embodiments, the method includes rendering the image of the topographic map with an image of a yield map of the field. Other types of useful maps can be generated as well, such as a map showing planting trench depths (based on data collected from monitoring operative rows of the implement). In some embodiments, the method also includes performing the aforementioned operations for multiple or all the operative rows of an implement.

For the purposes of this disclosure, it is to be understood that the term "operative rows" is synonymous with the term "row units" and the term "operative row" is synonymous with the term "row unit".

In providing techniques for mapping row position of agricultural implements to be rendered in a digital geographic map that can be displayed via a GUI, the systems and methods described herein overcome some technical problems in yield mapping or agricultural mapping in general as well as some technical problems in planning and controlling use of an implement, such as a planter, in a crop field. Also, the techniques disclosed herein provide specific technical solutions to at least overcome the technical problems mentioned in the background section or other parts of the application as well as other technical problems not described herein but recognized by those skilled in the art.

With respect to some embodiments, disclosed herein are computerized methods for mapping row position of agricultural implements, as well as a non-transitory computer-readable storage medium for carrying out technical operations of the computerized methods. The non-transitory computer-readable storage medium has tangibly stored thereon, or tangibly encoded thereon, computer readable instructions that when executed by one or more devices (e.g., one or more personal computers or servers) cause at least one processor to perform a method for mapping row position of agricultural implements.

For example, in some embodiments, a method includes a step of receiving, by a computing system, a sensed position of an operative row of an agricultural implement at a geographic location of a crop field while the agricultural implement moves through the crop field. The method also includes a step of matching, by the computing system, the geographic location of the crop field with a location entity of a model for a row position map of the crop field, wherein the location entity corresponds to the geographic location. The method also includes a step of associating, by the computing system, the sensed position of the operative row to the location entity of the model. In some embodiments, the method includes repeating, by the computing system, the three aforementioned steps for a plurality of geographic locations of the crop field. In some of such embodiments, the method also includes rendering, by a mapping application of the computing system, the row position map to be displayed in a graphical user interface, based on the model for the row position map. The row position map shows at least a plurality of sensed positions of the row at a plurality of location entities of the model corresponding to geographic locations of the crop field where sensing of the plurality of sensed positions of the row occurred.

In some embodiments, the method includes rendering, by the mapping application of the computing system, the row position map to be displayed along with a yield map of the crop field. In some instances, the rendering of the row position map includes combining the row position map with the yield map. For example, the combining of the maps includes the row position map overlapping the yield map, or vice versa. In some other instances, the rendering of the row position map includes rendering the row position map to be positioned adjacent to the yield map.

In some embodiments, the agricultural implement is a planter, and the method includes sensing, by a rotary sensor, the position of the row of the agricultural implement at the geographic location of the crop field while the agricultural implement moves through the crop field. In some embodiments of the method, the method includes sensing, by an accelerometer based sensor or an inclinometer, the position of the row of the agricultural implement at the geographic location of the crop field while the agricultural implement moves through the crop field.

In some embodiments, the operative row of the agricultural implement is a first operative row of a set of operative rows of the agricultural implement, and the method further includes the following steps: (1) receiving, by the computing system, a sensed position of a second operative row of the set of operative rows of the implement at the geographic location of the crop field while the agricultural implement moves through the crop field, at approximately the same time of the receiving of the sensed position of the first operative row of the set of operative rows of the implement, (2) determining, by the computing system, a position distribution of the set of operative rows of the implement based on the received position of the first operative row and the received position of the second operative row, and (3) associating, by the computing system, the determined position distribution to the location entity of the model corresponding to the geographic location of the crop field. In some of such embodiments, the determined position distribution includes respective indications of the sensed position of the first operative row and the second operative row of the set of operative rows of the implement. Also, in some of such embodiments, the method includes repeating, by the computing system, the last mentioned for a plurality of geographic locations of the crop field. In some of such embodiments, the method includes rendering, by a mapping application of the computing system, the row position map to be displayed in a graphical user interface, based on the model for the row position map. In such examples, the row position map shows at least a plurality of determined position distributions of the set of operative rows of the agricultural implement at a plurality of location entities of the model corresponding to geographic locations of the crop field where sensing of the positions of the first row and the second row of the set of operative rows occurred. Also, in some embodiments, the method includes sensing, by a first rotary sensor, the position of the first operative row of the set of operative rows of the agricultural implement at the geographic location of the crop field while the implement moves through the crop field as well as sensing, by a second rotary sensor, the position of the second operative row of the set of operative rows of the implement at the geographic location of the crop field while the implement moves through the crop field. Alternatively, in some other embodiments, the first and second rotary sensors can be replaced with first and second accelerometer based sensors or first and second inclinometers that sense the positions of the first and second sections of the set of sections of the VCT, respectively.

In some embodiments, the method includes rendering, by a mapping application of the computing system, a topographic map to be displayed in a graphical user interface, based on the model for the row position map and a set of correlations between operative row positions and three-dimensional qualities of a surface of a crop field. In some of such embodiments, the topographic map shows the three-dimensional qualities of the surface of the crop field at a plurality of location entities of the model corresponding to geographic locations of the crop field where sensing of the sensed positions of the row occurred. In some instances, the three-dimensional qualities include a plurality of different elevations higher or lower than a baseline elevation of the crop field. For example, the plurality of different elevations include a plurality of heights above sea level. Also, in some embodiments, the method includes rendering, by the mapping application of the computing system, the topographic map to be displayed along with a yield map of the crop field.

With respect to some embodiments, the techniques include a non-transitory computer readable storage medium including computer program instructions configured to instruct a computer processor to perform at least the computerized steps of the aforementioned methods. With respect to some embodiments, the techniques include a computing device, including: at least one processor; and a storage medium tangibly storing thereon program logic configured to receive a sensed position of an operative row of an agricultural implement at a geographic location of a crop field while the agricultural implement moves through the crop field. Also, included is program logic, tangibly stored in the medium, configured to match the geographic location of the crop field with a location entity of a model for a row position map of the crop field, wherein the location entity corresponds to the geographic location. Also, included is program logic, tangibly stored in the medium, configured to associate the sensed position of the operative row to the location entity of the model.

These and other important aspects of the invention are described more fully in the detailed description below. The invention is not limited to the particular methods and systems described herein. Other embodiments can be used and changes to the described embodiments can be made without departing from the scope of the claims that follow the detailed description.

### BRIEF DESCRIPTION OF THE DRAWINGS

The present disclosure will be understood more fully from the detailed description given below and from the accompanying drawings of various embodiments of the disclosure.
FIG. 1 illustrates a simplified side perspective view of a tractor pulling an implement, in accordance with some embodiments of the present disclosure.
FIG. 2 is a simplified rear perspective view of the implement shown in FIG. 1 on level ground, in accordance with some embodiments of the present disclosure.
FIG. 3 is a simplified rear perspective view of the implement shown in FIG. 1 on sloped ground, in accordance with some embodiments of the present disclosure.
FIGS. 4, 5, and 6 illustrate example methods, in accordance with some embodiments of the present disclosure.
FIGS. 7, 8, 9, 10, and 11 illustrate a display of a user interface device displaying a row position map, a topographic map, a row position map overlapping a yield map of the same crop field, a row position map displayed adjacent to a yield map of the same crop field, and a yield map overlapping a topographic map of the same crop field, respectively, in accordance with some embodiments of the present disclosure.
FIG. 12 illustrates a block diagram of example aspects of a computing system, in accordance with some embodiments of the present disclosure.

### DETAILED DESCRIPTION OF EXAMPLE EMBODIMENTS

Details of example embodiments of the invention are described in the following detailed description with reference to the drawings. Although the detailed description provides reference to example embodiments, it is to be understood that the invention disclosed herein is not limited to such example embodiments. But to the contrary, the invention disclosed herein includes numerous alternatives, modifications and equivalents as will become apparent from consideration of the following detailed description and other parts of this disclosure.

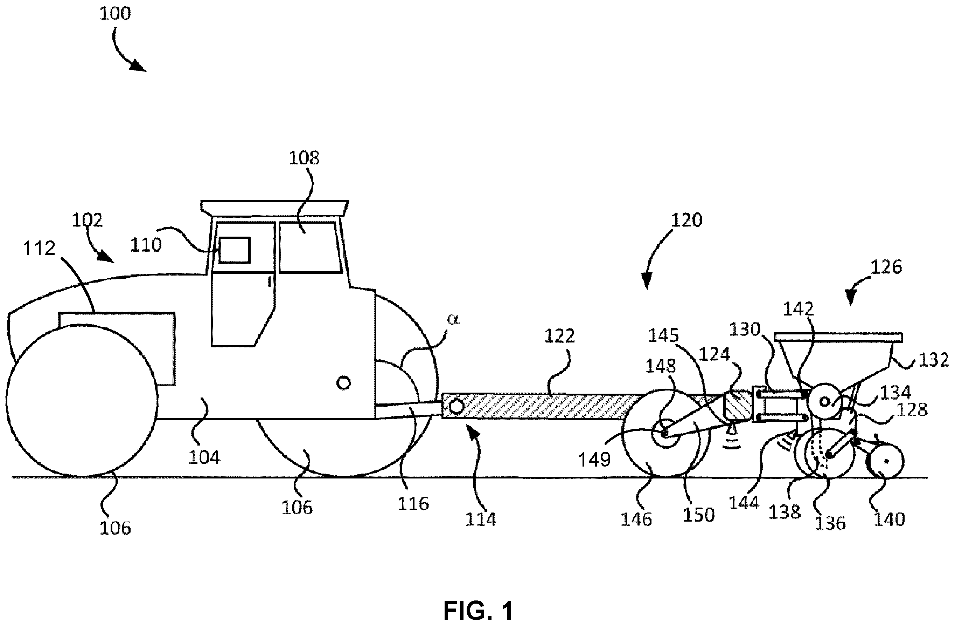

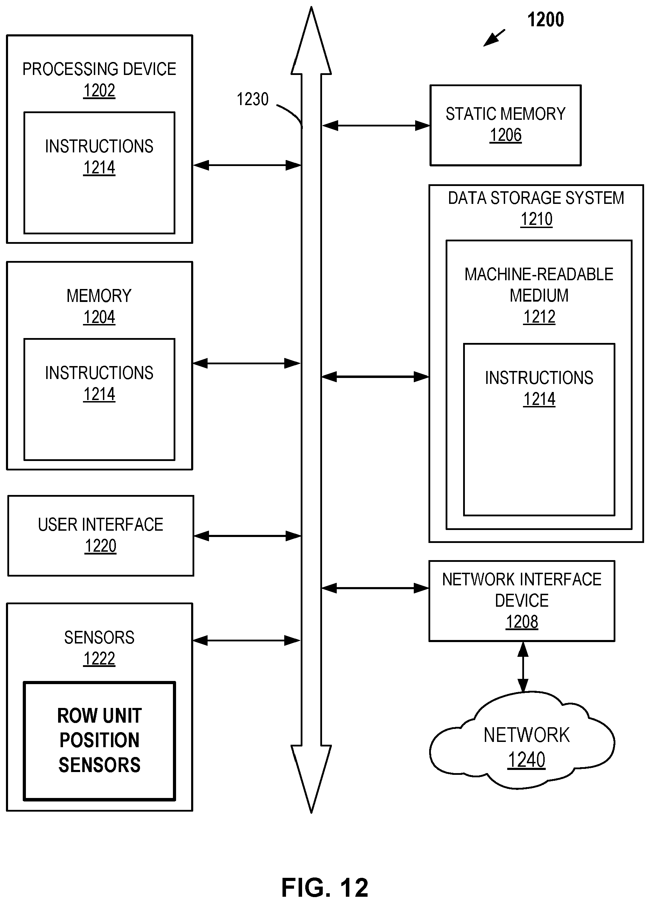

FIG. 1 is a simplified side perspective view of a system 100 including a tractor 102 and an implement 120. The tractor 102 includes a chassis 104 supported by wheels 106 (or tracks in some examples). An operator cab 108 is supported by the chassis 104 and includes a control system 110 that controls operation of the tractor 102 and the implement 120. In some embodiments, the operator cab 108 is omitted if the tractor 102 is configured to function without an onboard human operator (e.g., as a remotely operated drone or a computer-operated machine). In some embodiments, the control system 110 includes a central processing unit ("CPU"), memory, and graphical user interface ("GUI") (e.g., a touch-screen interface). In some embodiments, the control system 110 is, includes, or is a part of a computing system (such as the computing system shown in FIG. 12). A global positioning system ("GPS") receiver is mounted to the tractor 102 and connected to communicate with the control system 110. The tractor 102 has a power source 112 configured to move wheels 106 of the tractor. The power source 112 includes an internal combustion engine, an electric motor, or other another type of power source. The power source 112 also provides power to a lift system 114 carried by the tractor 102, which is depicted as a tow hitch 116. For the purpose of simplifying the illustration in FIG. 1, one of the rear wheels 106 has been omitted from view to more clearly show the tow hitch 116. The tow hitch 116 is a 2-point lifting hitch, as shown. In some other embodiments, the implement 120 is pulled by a 3-point lifting hitch or a fixed drawbar, for example. In some embodiments, if the implement 120 is pulled by a 3-point hitch, the top link thereof is not connected to the implement 120. Thus, in such embodiments, the implement 120 pivots with respect to the tow hitch 116. In some embodiments, the lift system 114 is a part of the implement 120, and thus the implement 120 is pulled by a fixed drawbar that is stationary relative to the tractor 102. In such embodiments, the implement 120 itself includes a pivoting or lateral adjustment, such as a support coupled to one or more actuators, in place of the tow hitch 116 shown.

As shown in FIG. 1, the implement 120 has a frame 122 including an integrated toolbar 124 supporting row units 126. For the purposes of this disclosure, it is to be understood that the term "row units" is synonymous with the term "operative rows" and the term "row unit" is synonymous with the term "operative row". The row units 126 are any type of ground-engaging device for planting, seeding, fertilizing, tilling, or otherwise working crops or soil, arranged in rows. As an example, the row units 126 are shown in the form of planter row units. Each of the row units 126 have a body 128 pivotally connected to the toolbar 124 by a parallel linkage 130, enabling each one of the row units 126 to move vertically independent of the toolbar 124 and each other. In some embodiments, the body 128 of a row of the row units 126 is connected to the toolbar 124 by another structure, such as a rotating arm. The body 128 is a unitary member in some embodiments, or includes one or more members coupled together (e.g., by bolts, welds, etc.) in some other embodiments. The body 128 operably supports one or more hoppers 132, a seed meter 134, a seed delivery mechanism 136, a seed trench opening assembly 138, a trench closing assembly 140, and any other components as known in the art that is supported by such a body. It should be understood that the row units 126 shown in FIG. 1 are optionally a part of a central fill planter in some embodiments, in which case the hoppers 132 are one or more mini-hoppers fed by a central hopper carried by the implement 120 in some of such examples.

The implement 120 is supported by wheels 146 coupled to the implement frame 122 (in which only one of the wheels 146 is shown in FIG. 1). Each of the wheels 146 rotate about an axle 148 connected to the frame 122 by a fixed mount 150. In some embodiments, the axles connected to the frame 122 are part of one axle. An axle 148 defines an axis of rotation around which the corresponding wheel of the wheels 146 rotates. The axle 148 includes or is a part of a spindle that includes a load sensor 149 (such as a load cell), and both the spindle and the load sensor are parts of a wheel of the wheels 146 in some embodiments. In some other embodiments, the spindle is not a part of a wheel of the wheels 146.

In some embodiments, each wheel of the wheels 146 is replaced with a group of wheels in tandem. In such embodiments, each group of wheels operates in tandem according to a combination of linkages of a pivot. In such embodiments, the load sensor 149 is a part attached to one of the wheels or the pivot. In some embodiments, the pivot includes a walking tandem pivot and the load sensor 149 is attached to the walking tandem pivot.

In some embodiments, the spindle is a smart spindle that is configured to automatically adjust tire pressures of the wheels 146 and provide and receive signals for control of the tire pressures from a console of the operator cab 108, reducing compaction, improving ride quality, and increasing tire longevity and efficiency of propulsion of the implement 120. Also, in some embodiments, the respective smart spindles of the wheels 146 are configured to monitor weight distribution across tires of the wheels, as well as is automatically adjust tire pressures while the implement is operating in the crop field. By utilizing the aforementioned feature, the spindles of the wheels 146 are capable of reducing tire pressure to low PSI levels, which increases respective gross flat plate areas and reduces compaction of the wheels.

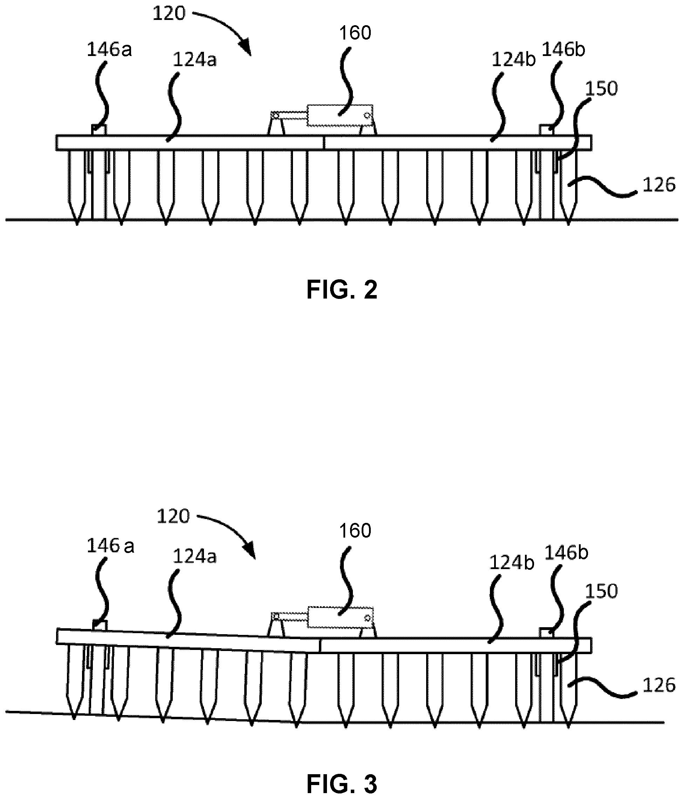

A respective weight of the implement frame 122 is supported by each one of the wheels 146 and the load sensor 149 of each wheel is configured to sense the respective weight. To clarify, a respective weight is exerted on a wheel of the wheels 146 and the respective weight is a part of the overall weight of the implement frame 122; and thus, the weights sensed by each load sensor 149 of the wheels 146 can be added together by a computing system to determine the overall weight on the wheels 146. Though only one of the wheels 146 is shown in FIG. 1, multiple wheels 146 (e.g., two wheels, three wheels, four wheels, etc., depending on the embodiment) supports the weight of the implement frame 122. In the embodiment, shown in FIGS. 2 and 3, the wheels 146 include two wheels 146a and 146b; and although not depicted, each one of the wheels 146a and 146b includes a load sensor 149 configured to sense the weight exerted on the wheel it is a part of.

A row position sensor 142 and a row position sensor 144 are each configured to sense a position of a row unit 126 (such as sense position relative to the ground). In some embodiments, row position sensors 142 and 144 are attached to the body 128 of the row unit 126 itself. In other embodiments, the sensors 142 and 144 are carried by the toolbar 124, the tractor 102, or even by another vehicle (e.g., another ground vehicle, an unmanned aerial vehicle, etc.). In some embodiments, the sensor 142 is a rotary sensor configured to measure an angle of an element of the parallel linkage 130 relative to the body 128 of the row unit 126 or to the toolbar 124, and it is connected to a pivot point of the body 128 of the row unit 126 or to the toolbar 124. In some embodiments, the sensor 142 is an accelerometer based sensor or an inclinometer. A sensor 145 is configured to detect the position of the toolbar 124 (such as a position relative to the ground). In some embodiments, the sensors 144 and 145 include a non-contact depth sensor, for example, an optical sensor, an ultrasonic transducer, an RF (radio frequency) sensor, lidar, radar, or any type of trench depth sensor that senses depth without contacting the trench, or some combination thereof.

In some embodiments, the sensors 142, 144, 145, and 149 provide information to the control system 110, which information can be used by the control system 110 to determine how to adjust the lift system 114, pressure in one or more of the wheels 146, position of one or more of the row units 126, position of the toolbar 124, or position of one or more of sections of the toolbar (e.g., see section 124a and section 124b of toolbar shown in FIGS. 2 and 3), or some combination thereof. For example, the control system 110 is configured to receive a signal (e.g., a wired or wireless signal) related to the position of a row unit of the row units 126 (such as relative to the ground) and cause the lift system 114 to raise or lower based at least in part on the signal. Also, for example, the control system 110 is configured to receive a signal related to the position of a row unit of the row units 126 and cause the row unit to raise or lower based at least in part on the signal. Also, for example, the control system 110 is configured to receive a signal related to a weight exerted on a wheel of the wheels 146 and cause the wheel to inflate or deflate based at least in part on the signal--such as inflate or deflate via a smart spindle configured to inflate and deflate the wheel according to the signal. Also, for example, the control system 110 is configured to receive a signal related to the position of the toolbar 124 or one or more of the section 124a and the section 124b of the toolbar (such as relative to the ground) and cause the toolbar or one or more of the sections to raise or lower based at least in part on the signal.

In some embodiments, vertical movement of the lift system 114 causes rotation of the frame 122 about axle 148. In some embodiments, if the lift system 114 includes a 3-point or 2-point lifting hitch (such as tow hitch 116), the lift system 114 is used to raise or lower the toolbar 124 by changing an angle α of the frame 122 relative to the ground. In some embodiments, the lift system 114 is configured such that upward movement of the front of the frame 122 can cause downward movement of the toolbar 124 because the toolbar 124 is fixed relative to the frame 122.

In some embodiments, when the tractor 102 encounters a change in field elevation or slope, one or more of the sensors 142, 144, 145, and 149 provide a signal or signals to the control system 110, and the control system 110 uses the signal(s) to calculate how to change the position of the lift system 114 or another adjustable part of the implement 120 or how to change the pressurization of the wheels 146 to maintain a preselected position of the toolbar 124 or one or more of the row units 126. For example, when the front wheels of the wheels 106 of the tractor 102 travel up a slope, the tractor 102 tilts upward, and points on the tractor 102 behind its rear axle become closer to the ground. However, because the implement 120 is still on level ground, the lift system 114 raises (corresponding to a smaller angle a) relative to the tractor 102 to keep the frame 122 oriented such that the row units 126 can engage the ground. In some embodiments, the tractor 102 can continue up a slope, and the lift system 114 in such situations lowers relative to the tractor 102 (corresponding to a larger angle α) to maintain the same orientation shown in FIG. 1. In some embodiments, the tractor 102 can travel on level ground as the implement 120 is still traveling up the slope, and the lift system 114 raises relative to the tractor 102 (corresponding to a smaller angle α) to maintain the same relative orientation between the implement frame 122 and the ground.

The parallel linkages 130 are shown in the same position (approximately parallel to the frame 122). However, the parallel linkages 130 of each row unit 126 also adjust to move the row units 126 and move independent of one another. Vertical movement of the lift system 114 provides additional range of motion to enable the implement 120 to keep the row units 126 engaged with the soil, whereas reliance on movement of the parallel linkages 130 alone would limit the range of terrain over which the row units 126 could be effectively used. Also, inflation and deflation of the wheels 146 provides additional range of motion to enable the implement 120 to keep the row units 126 engaged with the soil. Although, it is to be understood that the main purpose of inflating and deflating the wheels 146 is to reduce or limit compaction in the crop field caused by the wheels.

Also, the frame 122 of the implement 120 pivots relative to the lift system 114. Thus, the position of the toolbar 124 varies based on the position of the lift system 114 (e.g., the position of the tow hitch 116) and the contours of the ground. Vertical movement of the lift system 114 while the ground is flat causes tilting of the frame 122 relative to the ground. The position of the row units 126 relative to the ground depends on the position of the toolbar 124 (which in turn depends on the position and angle of the frame 122) and the position of the parallel linkage 130, and in some embodiments, on the pressurization of the wheels 146.

The height of each unit of the row units 126 is adjustable independently of the other row units 126 by adjusting the parallel linkages 130. In certain field terrain, each parallel linkage 130 is adjusted within its operating range such that each unit of the row units 126 interacts with the ground at a preselected position. Movement of the toolbar 124 based on the lift system 114 can increase the effective range of height of the row units 126 relative to the tractor 102. Thus, the implement 120 in combination with the tractor 102 as described may effectively be used to work fields having contours that are steeper than contours that can be effectively worked by conventional implements. Also, in some embodiments, pressurization of the wheels 146 play a part on adjusting positions of the row units 126 as well as reducing compaction in the crop field potentially caused by the wheels. In some embodiments, adjustment of pressurization of the wheels 146 reduces compaction and increases efficiency of the propulsion of the implement 120, but it is not used to control positioning of the row units 126.

FIG. 2 shows a simplified rear perspective view of the implement 120 traveling over level ground. The lift system 114 is adjusted such that the row units 126 each engage the ground by appropriate adjustment of the parallel linkages 130. The parallel linkages 130 may adjust the depth at which row units 126 operate (e.g., plant seeds) in the ground.

FIG. 3 shows a simplified rear perspective view of the implement 120 traveling over sloped ground and illustrates how the implement 120 adjusts to different terrain. In FIG. 3, the ground at the left-hand side is sloped upward from the center, and the ground at the right-hand side is level. The toolbar 124 includes or is coupled to section 124a and section 124b that are adjustable and flex (e.g., move relative to the toolbar 124 or each other) to match different terrain. Actuator 160 raises or lowers the section 124a or the section 124b such that the row units 126 carried by that the wing section remain at a preselected position with respect to the ground. That is, in addition to the parallel linkage 130, which is adjustable on a per-row-unit basis, as well as optionally in addition to inflating or deflating the wheels, the actuator 160 or the lift system 114, or the pressure of the wheels 146 (e.g., see wheels 146a and 146b), or a combination thereof, adjusts the height or angle of the toolbar 124 or the section 124a and the section 124b, based at least in part on the sensed positions of the row units 126. Adjustment of the actuator 160 provides an additional range of adjustment beyond that provided by the parallel linkages 130, the lift system 114, and the pressurization of the wheels 146. That is, the row units 126 are configured to be adjusted by moving the toolbar 124 (or the sections thereof) upward or downward (e.g., by moving the lift system 114 or by moving the toolbar or its sections themselves or by pressurization of the wheels 146), by moving the actuator 160, and by moving the row units 126 with respect to the toolbar 124 (e.g., by rotating the parallel linkage 130). Thus, each row unit 126 may exhibit a wider total range of motion than an implement 120 having only the parallel linkage 130 to adjust the height of the row unit 126 with respect to the tractor 102.

As shown, there may be multiple row units 126 on each of the section 124a and section 124b of the toolbar 124. Thus, movement of the actuator 160 changes the position of the multiple row units 126 as well as the positions of and the weights exerted on the wheels 146a and 146b. The control system 110 is configured to calculate an appropriate position of the actuator 160, the lift system 114, and the parallel linkages 130, and optionally the pressurization of the wheels 146a and 146b, so that the row units 126 are each at a preselected depth. That is, for example, the control system 110 selects an actuator position and a hitch position such that the row units 126 are adjusted with the parallel linkages 130 to be at a preselected depth. These positions and other positions or attributes of the implement 120 described herein affect the respective weights distributed on each of the wheels 146a and 146b; and thus, the sensed distributed weights on the wheels provide feedback to the control system 110 as well. The actuator 160, similar to the other adjustable components of the implement 120 enable a wider range of operating conditions (e.g., maximum field slope variation) than conventional wing control systems and enable the control system 110 to respond more quickly to changing field terrain. Additionally, the actuator 160, similar to the other adjustable components of the implement 120 enable a computing system of the control system 110 or another computing system linked to parts of the implement to generate various maps related to parameters of the adjustable components of the implement-such as maps of wheel weights, maps of toolbar position, and maps of row position. The maps can be combined with yield maps to provide even more information about operations of the implement in a crop field.

Though the implement 120 is described herein as a planter, other types of implements may have other types of row units, such as tillage implements (e.g., disc harrows, chisel plows, field cultivators, etc.) and seeding tools (e.g., grain drills, disc drills, etc.).

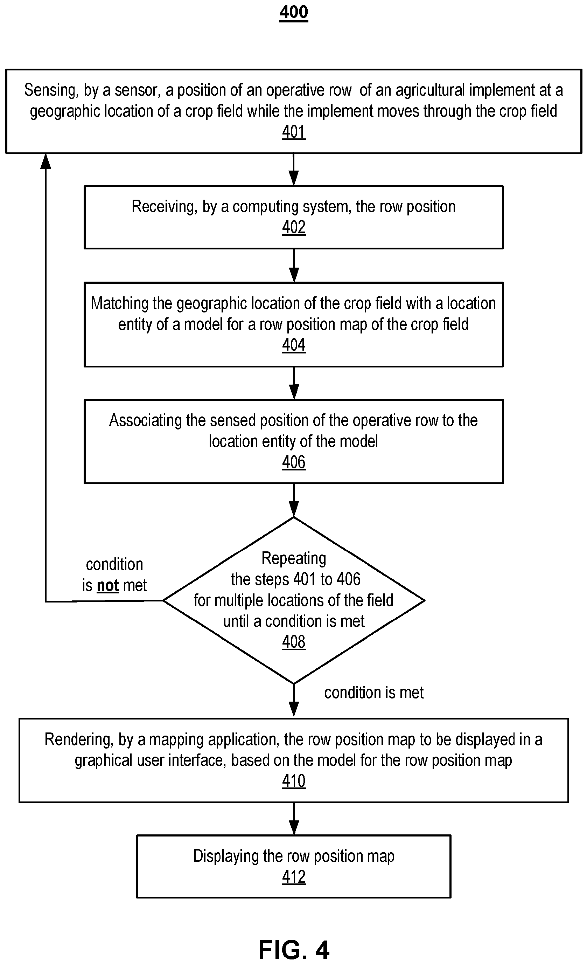

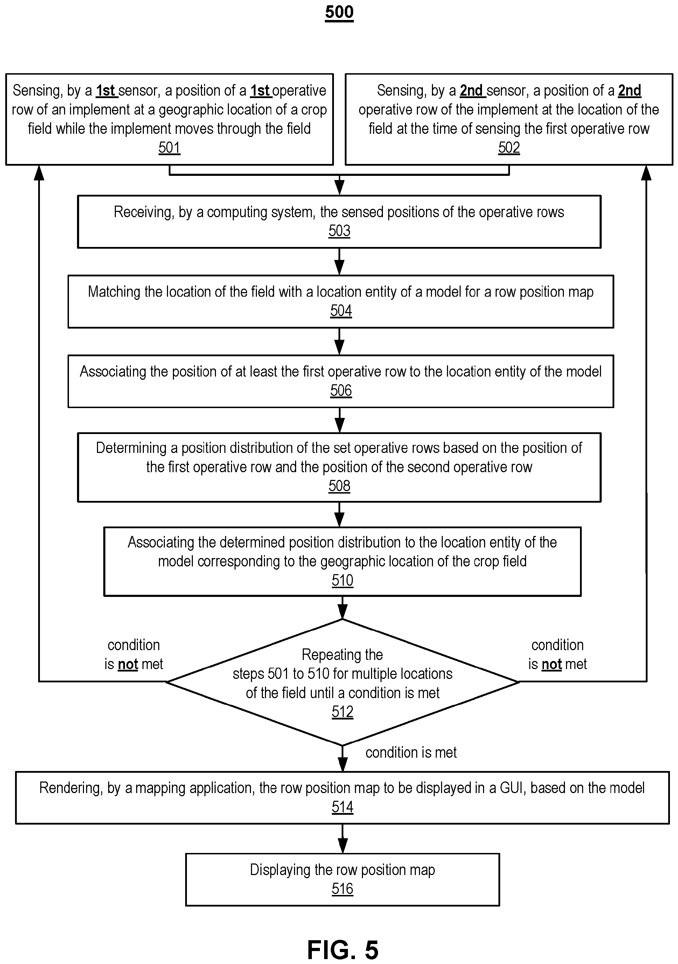

Turning to FIGS. 4, 5, and 6, shown are methods 400, 500, and 600, respectively, which can be methods of the control system 110 or another computing system linked to parts of the implement, configured to generate various maps related to parameters of the adjustable components of the implement (e.g., see computing system 1100). In some embodiments of the methods 400, 500, and 600, the agricultural implement is a planter (e.g., see implement 120). In some of such embodiments, the planter includes a toolbar (e.g., see toolbar 124) and operative rows connected to the toolbar (e.g., see row units 126) as well as a set of wheels (e.g., see wheels 146a, and 146b) which are coupled with the toolbar. In some of such embodiments, the toolbar includes a vertically contouring toolbar, and the vertically contouring toolbar (VCT) includes a set of sections that are adjustable to different respective positions vertically (e.g., see section 124a and section 124b of the toolbar shown in FIGS. 2 and 3). In some of such examples, the operative rows are adjustable to different respective positions vertically independently of or in combination with vertical adjustments to the sections of the VCT. Such examples are applicable to aspects of the method 500 shown in FIG. 5.

In some embodiments of the aforementioned methods, the sensing of a position of a row unit is performed by a rotary sensor. In some of such examples, the rotary sensor is connected to the row unit being monitored. In other words, in some instances, the operative row self-monitors its position via its rotary sensor. In some embodiments, the rotary sensor is connected to a linkage of the row unit and configured to communicate the sensed position of the operative row to the computing system. Alternatively, in some other embodiments, the rotary sensor can be replaced with an accelerometer based sensor or an inclinometer that senses the row position and communicates the sensed position to the computing system.

As shown in FIG. 4, the method 400, at step 401, starts with sensing, by a sensor (e.g., see sensors 142 and 144 shown in FIG. 1), a position of an operative row (i.e., row unit) of an agricultural implement at a geographic location of a crop field while the implement moves through the crop field. At step 402, the method 400 continues with receiving, by a computing system, the sensed position of the operative row of the agricultural implement at the geographic location of the crop field while the agricultural implement moves through the crop field. In some embodiments, the computing system measures a signal sent from the sensor to determine the position of the operative row. In some embodiments, step 401 includes sensing, by a rotary sensor, the position of the operative row at the geographic location of the crop field while the agricultural implement moves through the crop field, and in such examples, the sensor (e.g., see sensors 142 and 144) is replaced with a rotary sensor or complements the rotary sensor in sensing the position of the operative row. Alternatively, in some other embodiments, the rotary sensor can be replaced with an accelerometer based sensor or an inclinometer that senses the row position and communicates the sensed position to the computing system.

At step 404, the method 400, continues with matching, by the computing system, the geographic location of the crop field with a location entity of a model for a row position map of the crop field. The location entity corresponds to the geographic location. The method 400, at step 406 continues with associating, by the computing system, the sensed position of the operative row to the location entity of the model. The method 400, at step 408 continues with repeating, by the computing system, the steps 401, 402, 404, and 406 for a plurality of geographic locations of the crop field until a condition is met, such as until the implement is done operating in the crop field, until all geographic locations of the field have been operated upon by the implement, until a predetermined number of geographic locations of the field have been operated upon by the implement, etc.

At step 410, the method 400 continues with rendering, by a mapping application of the computing system, the row position map to be displayed in a graphical user interface, based on the model for the row position map. The row position map shows at least a plurality of sensed positions of the operative row at a plurality of location entities of the model corresponding to geographic locations of the crop field where sensing of the plurality of sensed positions of the operative row occurred. In some embodiments, the step 410 includes rendering, by the mapping application of the computing system, the row position map to be displayed along with a yield map of the crop field. In some of such embodiments, the rendering of the row position map includes combining the row position map with the yield map. In other embodiments, the rendering of the row position map includes rendering the row position map to be positioned adjacent to the yield map. In some of the embodiments where the row position map is combined with the yield map, the combining of the maps includes the row position map overlapping the yield map, or the yield map overlapping the row position map.

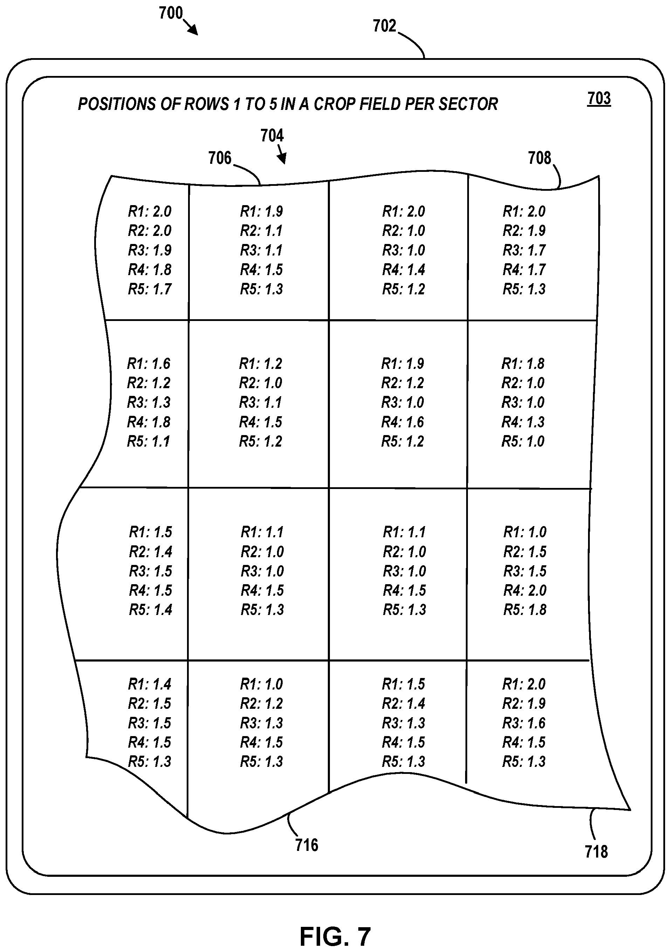

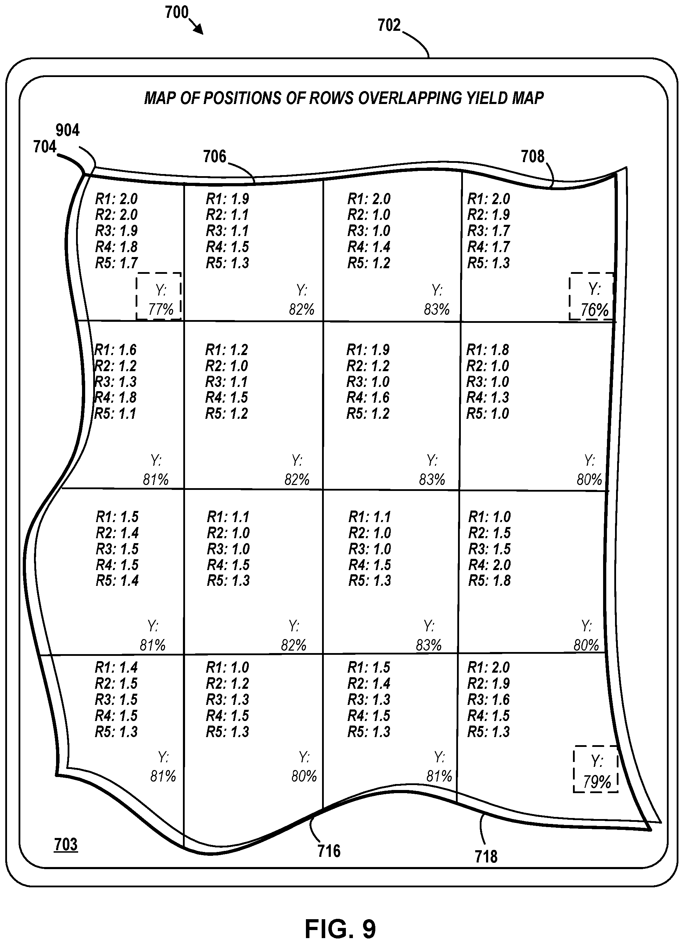

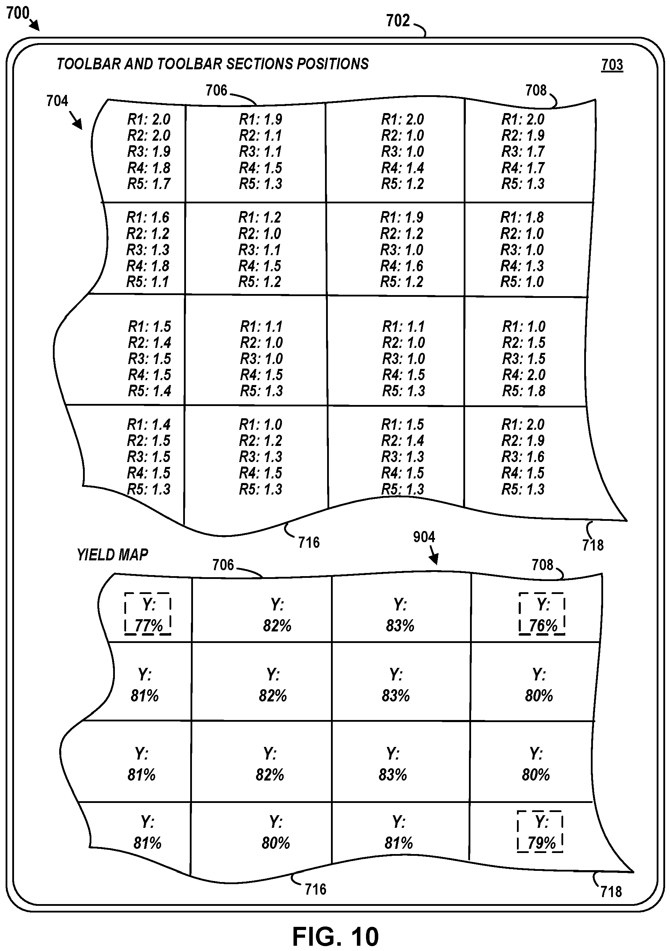

Finally, at step 412, the method 400 continues with displaying, by a GUI, the row position map (e.g., see FIG. 7, which illustrates a display 702 displaying multiple positions of operative rows, i.e., row units, of an implement at separate locations of the row position map 704). In some embodiments, the method 400 finishes with providing, by a user interface (Ul), the row position map. The user interface in such examples can include machinery operator controls, process controls, or another type of UI-which includes one or more layers, including a human-machine interface (HMI) that interfaces machines with physical input hardware and output hardware. In some embodiments, the UI is provided audially or visually. In some embodiments, the step 412 includes displaying, by the GUI, the row position map along with a yield map of the crop field (e.g., see FIGS. 9 and 10). In some of such embodiments, the displaying of the row position map includes combining the row position map with the yield map (e.g., see FIG. 9). In other embodiments, the displaying of the row position map includes displaying the row position map to be positioned adjacent to the yield map (e.g., see FIG. 10). In some of the embodiments where the row position map is combined with the yield map, the combining of the maps includes the row position map overlapping the yield map (e.g., see FIG. 9) or the yield map overlapping the row position map.

In the method 500 shown in FIG. 5, the toolbar of the agricultural implement includes a VCT, and the VCT includes a set of toolbar sections that are adjustable to different respective positions vertically. As shown in FIG. 5, the method 500, at step 501, starts with sensing, by a first sensor of the agricultural implement, a position of a first operative row of a set of operative rows of the implement at a geographic location of a crop field while the implement moves through the crop field. Also, as shown, at step 502, the method 500 starts with sensing, by a second sensor of the agricultural implement, a position of a second operative row of the set of operative rows of the implement at the geographic location of the crop field while the implement moves through the crop field. Specifically, step 502 includes sensing, by the second sensor, the position of the second operative row of the implement at the location of the field at the time of sensing the first operative row. The first operative row is connected to a first section of the set of toolbar sections of the VCT. The second operative row is connected to a second section of the set of toolbar sections of the VCT. In some other embodiments, the first row and the second row are connected to the same section of the set of toolbar sections (such as both rows being connected directly to the first toolbar section).

In some embodiments, step 501 includes sensing, by a first rotary sensor, the position of the first operative row of the set of rows of the implement at the geographic location of the crop field while the agricultural implement moves through the crop field, and step 502 includes sensing, by a second rotary sensor, the position of the second operative row of the set of rows of the implement at the geographic location of the crop field while the agricultural implement moves through the crop field. In such examples, the sensor 142 or the sensor 144 of each operative row of the implement is replaced with a rotary sensor or complements the rotary sensor in sensing positions of the first and second row units of the implement. In some of the embodiments with rotary sensors, the first rotary sensor is connected to a first linkage of the first operative row and configured to communicate the sensed position of the first operative row to the computing system, and the second rotary sensor is connected to a second linkage of the second operative row and configured to communicate the sensed position of the second operative row to the computing system. In such examples, the first linkage and the second linkage are linkages in a set of parallel linkages for the set of operative rows of the implement. Alternatively, in some other embodiments, the first and second rotary sensors can be replaced with first and second accelerometer based sensors or first and second inclinometers that sense the positions of the rows of the set of rows as well as communicate the sensed positions to the computing system, respectively.

At step 503, the method 500 continues with receiving, by a computing system, the sensed positions of the operative rows. Specifically, step 503 includes receiving, by the computing system, the sensed position of the first operative row of the set of rows of the implement at the geographic location of the crop field while the agricultural implement moves through the crop field. Also, step 503 includes receiving, by the computing system, the sensed position of the second operative row of the set of rows of the implement at the geographic location of the crop field while the agricultural implement moves through the crop field, at approximately the same time of the receiving of the sensed position of the first operative row of the set of rows. In some embodiments, the computing system measures a signal sent from the first sensor to determine the position of the first operative row. And, in such examples, the computing system also measures a signal sent from the second sensor to determine the position of the second operative row.

At step 504, the method 500 continues with matching, by the computing system, the geographic location of the crop field with a location entity of a model for a row position map of the crop field. The location entity corresponds to the geographic location. The method 500, at step 506 continues with associating, by the computing system, the sensed position of at least the first operative row of the set of operative rows of the implement to the location entity of the model. In some embodiments, the computing system associates the sensed position of the first and the second operative rows of the set of rows of the implement to the location entity of the model.

At step 508, the method 500 continues with determining, by the computing system, a position distribution of the set of operative rows of the implement based on the received position of the first operative row and the received position of the second operative row. In some embodiments, operations or forces applied to the toolbar and the row units of the implement can be balanced by height or position adjustments to the operative rows (i.e., row units) of the implement based on the determination of the position distribution as well as control of the distribution by the computing system or a control system such as control system 111. This is especially useful when the toolbar includes or is a VCT and when the row units are adjustable while the implement is moving through a field; however, the aforesaid features can be in embodiments wherein the toolbar has a set of sections but is not or does not include, necessarily, a VCT, and the row units are at fixed positions while the implement moves through the field. At 510, the method 500 continues with associating, by the computing system, the determined position distribution to the location entity of the model corresponding to the geographic location of the crop field. In some embodiments, the determined position distribution includes respective indications of the sensed position of the first operative row and the second operative row of the set of rows of the implement.

The method 500, at step 512 continues with repeating, by the computing system, the steps 501, 502, 503, 504, 506, 508, and 510 for a plurality of geographic locations of the crop field until a condition is met, such as until the implement is done operating in the crop field, until all geographic locations of the field have been operated upon by the implement, until a predetermined number of geographic locations of the field have been operated upon by the implement, etc.

At step 514, the method 500 continues with rendering, by a mapping application of the computing system, the row map to be displayed in a graphical user interface, based on the model for the row position map. For method 500, the row position map shows at least a plurality of determined position distributions of the set of operative rows of the implement at a plurality of location entities of the model corresponding to geographic locations of the crop field where sensing of the positions of the first operative row and the second operative row of set of rows occurred.

In some embodiments, the step 514 includes rendering, by the mapping application of the computing system, the row position map to be displayed along with a yield map of the crop field-such that the plurality of determined position distributions of the set of operative rows (i.e., set of row units) of the implement is shown along with crop yield indications at matching locations of the map. In some of such embodiments, the rendering of the row position map includes combining the row position map with the yield map. In other embodiments, the rendering of such a row position map with the row distributions includes rendering the row position map to be positioned adjacent to the yield map. In some of the embodiments where the row position map with the position distributions is combined with the yield map, the combining of the maps includes the row position map overlapping the yield map, or the yield map overlapping the row position map.

Finally, at step 516, the method 500 continues with displaying, by a GUI, the row position map with the position distributions of the set of operative rows of the implement. In some embodiments, the method 500 finishes with providing, by a Ul, the row position map. The user interface in such examples can include machinery operator controls, process controls, or another type of UI-which includes one or more layers, including an HMI that interfaces machines with physical input hardware and output hardware. In some of such embodiments, the UI is provided audially or visually.

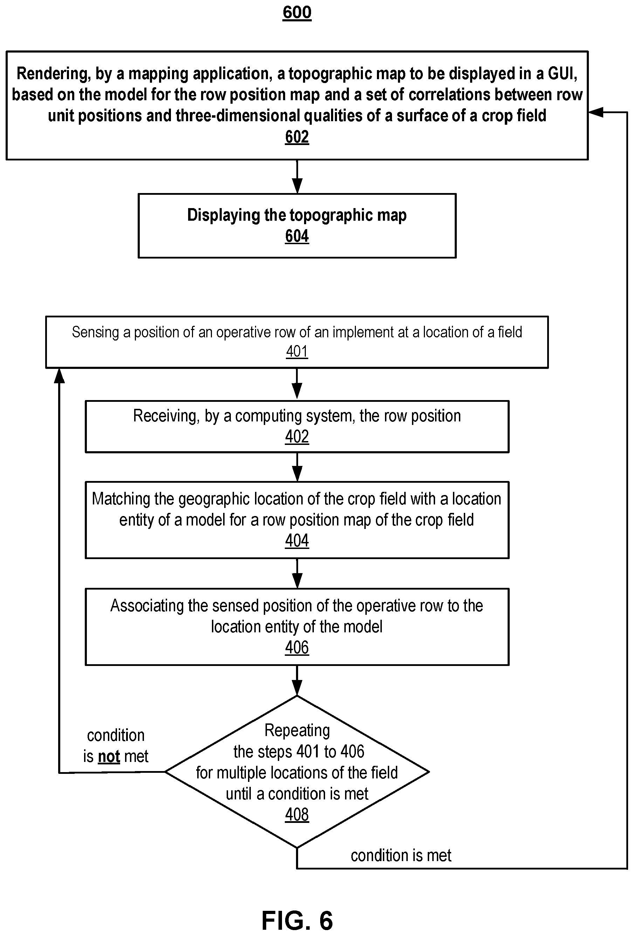

As shown in FIG. 6, the method 600 includes steps 401, 402, 404, 406, and 408 of method 400 and additional steps 602 and 604. Referring back to FIG. 4 or with respect to FIG. 6, the method 600 commences with step 401 that includes sensing, by a sensor, a position of an operative row of an agricultural implement at a geographic location of a crop field while the implement moves through the crop field. Similarly, at step 402, the method 400 continues with receiving, by a computing system, the sensed position of the row at the location of the field while the agricultural implement moves through the field. Also, similarly, step 404, in method 600, includes matching, by the computing system, the geographic location of the crop field with a location entity of a model for a row position map of the field. The method 600, at step 406 also continues with associating, by the computing system, the sensed position of the row to the location entity of the model. Also, similarly, the method 600, at step 408, continues with repeating, by the computing system, the steps 401, 402, 404, and 406 for a plurality of geographic locations of the crop field until a condition is met.

At step 602, the method 600 continues with rendering, by a mapping application of the computing system, a topographic map to be displayed in a graphical user interface, based on the model for the row position map and a set of correlations between operative row positions and three-dimensional qualities of a surface of a crop field. The topographic map shows the three-dimensional qualities of the surface of the crop field at a plurality of location entities of the model corresponding to geographic locations of the crop field where sensing of the positions of the operative row occurred. In some embodiments, the three-dimensional qualities include a plurality of different elevations higher or lower than a baseline elevation of the crop field. In some embodiments, the plurality of different elevations include a plurality of heights above sea level. In some embodiments, the method 600, at step 602, includes rendering, by the mapping application of the computing system, the topographic map to be displayed along with a yield map of the crop field. In some of such embodiments, the rendering of the topographic map includes combining the topographic map with the yield map. In some other embodiments, the rendering of the topographic map includes rendering the topographic map to be positioned adjacent to the yield map. In some of the embodiments where the topographic map is combined with the yield map, the combining of the maps includes the topographic map overlapping the yield map, or the yield map overlapping the topographic map.

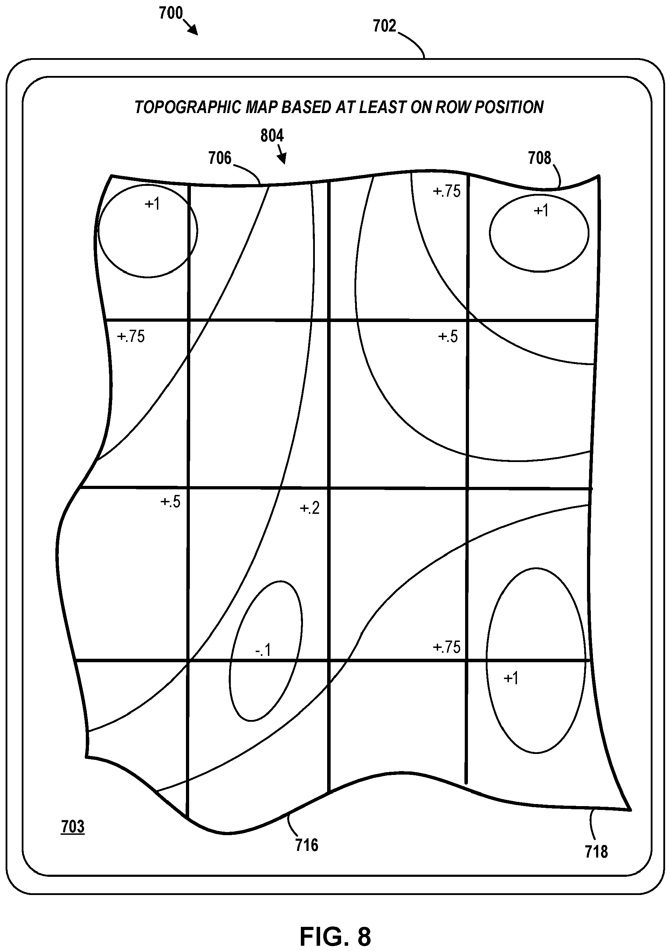

Finally, at step 604, the method 600 continues with displaying, by a GUI, the topographic map (e.g., see FIG. 8, which illustrates a display 702 displaying three-dimensional qualities of the surface of a crop field at separate locations of a topographic map 804). In some embodiments, the method 600 finishes with providing, by a Ul, the topographic map. The user interface in such examples can include machinery operator controls, process controls, or another type of UI-which includes one or more layers, including an HMI that interfaces machines with physical input hardware and output hardware. In some of such embodiments, the UI is provided audially or visually. In some embodiments, the step 604 includes displaying, by the GUI, the topographic map along with a yield map of the crop field . In some of such embodiments, the displaying of the topographic map includes combining the topographic map with the yield map. In other embodiments, the displaying of the topographic map includes displaying the topographic map to be positioned adjacent to the yield map. In some of the embodiments where the topographic map is combined with the yield map, the combining of the maps includes the topographic overlapping the yield map or the yield map overlapping the topographic map.

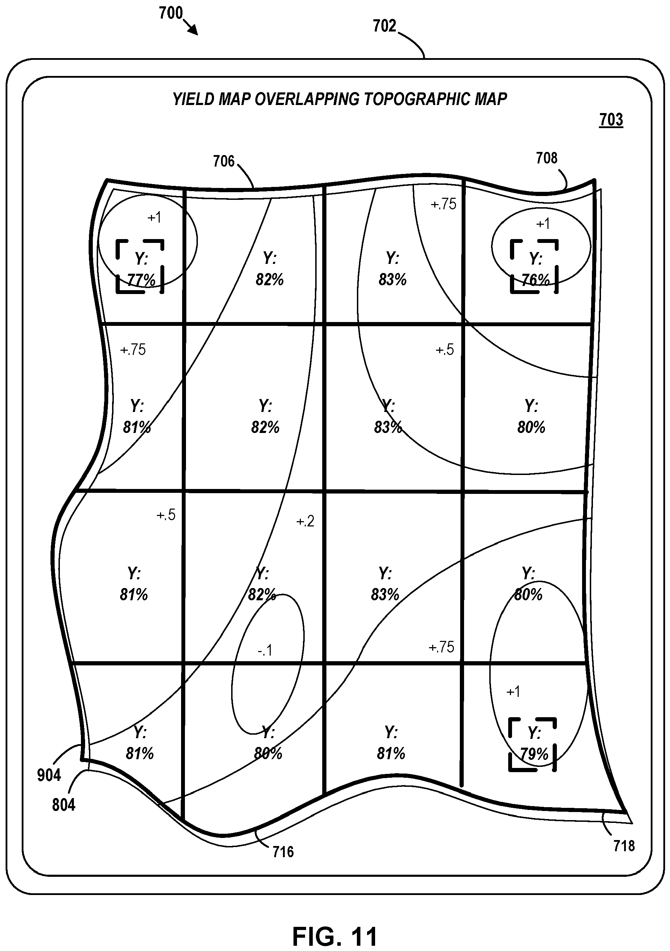

FIG. 7 illustrates the display 702 of user interface device 700 displaying a row position map 704 in a GUI 703, specifically. FIG. 8 illustrates the display 702 of user interface device 700 displaying a topographic map 804 in a GUI 703, specifically. FIG. 9 illustrates the display 702 of user interface device 700 displaying the row position map 704 overlapping a yield map 904 of the same crop field in a GUI 703, specifically. FIG. 10 illustrates the display 702 of user interface device 700 displaying the row position map 704 displayed adjacent to the yield map 904 of the same crop field in a GUI 703, specifically. FIG. 11 illustrates the display 702 of user interface device 700 displaying the yield map 904 overlapping the topographic map 804 of the same crop field in a GUI 703, specifically. FIGS. 7, 9, and 10 show operative row positions of a set of operative rows of an implement associated with separate locations of the field of crops, in accordance with some embodiments of the present disclosure (e.g., see methods 400 and 500). And, FIGS. 8 and 11 show topography of the field of crops, in accordance with some embodiments of the present disclosure (e.g., see method 600). Also, as shown in FIGS. 9 and 10, the yield map 904 provides warning indicators that graphically represent when the yield may be unacceptably low. The warning indicators in the yield map 904 are shown by a dashed-line rectangle that contains the corresponding yield for a sector. Also, when such a map is combined with a row position map, the operative row position distribution for a sector that has a subpar yield can be seen.

Referring to FIGS. 7, 9, and 10, the row position map 704 provides sensed row unit positions associated with separate locations of a field of crops. As shown in the last mentioned figures, each sector of the row position map 704 includes positions for five operative rows of an implement (e.g., see the labels "R1:", "R2:", "R3:", "R4:", and "R5:" in FIG. 7). For example, the implement can be a planter with a toolbar having at least five adjustable row units (such as the described implement of FIGS. 1 to 3 and the described implement of the method 500 of FIG. 5). In other words, a row position distribution is indicated and displayed per sector in the row position map 704 (e.g., see the map generated in method 500, which includes the row position distributions of the set of operative rows of the implement as the implement moves through the crop field).

The row unit positions outputted by the computing system (such as the positions provided on a row position map) can correlate to trench depth and flawed trenches and trench depth and other problems that are studied and monitored by farmers and operators of implements such as planters. Also, in some embodiments, the positions provided by a UI, such as GUI 703, are respective averaged positions for sectors. In such examples, multiple measurements are made per row unit and per sector.

In some embodiments, the row position map 704 can be combined with a yield map 904 (e.g., see FIG. 9). The advantage of the row position map or the row position map combined with the yield map over the yield map alone is that the row position map provides additional information on the factors for the yields represented in a yield map. The row position map can also be combined with several types of agriculture informational maps such as a soil quality map, a soil moisture map, a soil pH-level map, or a crop or carbon density map. Such combined maps can then be used to analyze a crop and its field and possibly improve farming practices or some other variance that may affect crop yield. As shown in FIG. 9, the row position map 704 is combined and overlaps the yield map 904. The yield map 904 provides a crop yield percentage per sector and if the percentage is under 80%, a graphical warning is provided (e.g., see sectors 708 and 718 in FIGS. 9, 10 and 11). On the other hand, no graphical warning is provided in a sector when the percentage of the yield is equal to or greater than 80% (e.g., see sectors 706 and 716). The warning indicators in the maps are shown by a dashed-line rectangle that contains the corresponding yield for a sector. In some embodiments, the threshold for providing the warning indicator is adjustable.

FIG. 12 shows a block diagram of example aspects of the computing system 1200, which can be or be a part of any one of the computing systems described herein (such as a computing system of the control system 110). FIG. 12 illustrates parts of the computing system 1200 within which a set of instructions, for causing a machine (such as a computer processor or processing device 1202) to perform any one or more of the methodologies discussed herein, are executed. In some embodiments, the computing system 1200 corresponds to a host system that includes, is coupled to, or utilizes memory or is used to perform the operations performed by any one of the computing devices, data processors, user interface devices, and sensors described herein. In alternative embodiments, the machine is connected (e.g., networked) to other machines in a LAN, an intranet, an extranet, or the Internet. In some embodiments, the machine operates in the capacity of a server or a client machine in client-server network environment, as a peer machine in a peer-to-peer (or distributed) network environment, or as a server or a client machine in a cloud computing infrastructure or environment. In some embodiments, the machine is a personal computer (PC), a tablet PC, a cellular telephone, a web appliance, a server, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein.

The computing system 1200 includes a processing device 1202, a main memory 1204 (e.g., read-only memory (ROM), flash memory, dynamic random-access memory (DRAM), etc.), a static memory 1206 (e.g., flash memory, static random-access memory (SRAM), etc.), and a data storage system 1210, which communicate with each other via a bus 1230. The processing device 1202 represents one or more general-purpose processing devices such as a microprocessor, a central processing unit, or the like. More particularly, the processing device can include a microprocessor or a processor implementing other instruction sets, or processors implementing a combination of instruction sets. Or, the processing device 1202 is one or more special-purpose processing devices such as an application specific integrated circuit (ASIC), a field programmable gate array (FPGA), a digital signal processor (DSP), network processor, or the like. The processing device 1202 is configured to execute instructions 1214 for performing the operations discussed herein. In some embodiments, the computing system 1200 includes a network interface device 1208 to communicate over a communications network 1240 shown in FIG. 12.

The data storage system 1210 includes a machine-readable storage medium 1212 (also known as a computer-readable medium) on which is stored one or more sets of instructions 1214 or software embodying any one or more of the methodologies or functions described herein. The instructions 1214 also reside, completely or at least partially, within the main memory 1204 or within the processing device 1202 during execution thereof by the computing system 1200, the main memory 1204 and the processing device 1202 also constituting machine-readable storage media.

In some embodiments, the instructions 1214 include instructions to implement functionality corresponding to any one of the computing devices, data processors, user interface devices, I/O devices, and sensors described herein. While the machine-readable storage medium 1212 is shown in an example embodiment to be a single medium, the term "machine-readable storage medium" should be taken to include a single medium or multiple media that store the one or more sets of instructions. The term "machine-readable storage medium" shall also be taken to include any medium that is capable of storing or encoding a set of instructions for execution by the machine and that cause the machine to perform any one or more of the methodologies of the present disclosure. The term "machine-readable storage medium" shall accordingly be taken to include solid-state memories, optical media, or magnetic media.

Also, as shown, computing system 1200 includes user interface 1220 that includes a display, in some embodiments, and, for example, implements functionality corresponding to any one of the user interface devices disclosed herein. A user interface, such as user interface 1220, or a user interface device described herein includes any space or equipment where interactions between humans and machines occur. A user interface described herein allows operation and control of the machine from a human user, while the machine simultaneously provides feedback information to the user. Examples of a user interface (UI), or user interface device include the interactive aspects of computer operating systems (such as graphical user interfaces), machinery operator controls, and process controls. A UI described herein includes one or more layers, including a human-machine interface (HMI) that interfaces machines with physical input hardware and output hardware.

Also, as shown, computing system 1200 includes sensors 1222 that implement functionality corresponding to any one of the sensors disclosed herein (such as the row position sensors 142 and 144 shown in FIG. 1). In some embodiments, the sensors 1222 include a camera or another type of optical instrument that implement functionality of a camera in any one of the methodologies described herein. In some embodiments, the sensors 1222 include a device, a module, a machine, or a subsystem that detect objects, events or changes in its environment and send the information to other electronics or devices, such as a computer processor or a computing system in general. In some embodiments, the sensors 1222 additionally include a position sensor, a linear displacement sensor, an angular displacement sensor, a pressure sensor, a load cell, or any other sensor useable to sense a physical attribute of an agricultural vehicle related to driving and steering of the vehicle, or any combination thereof.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a predetermined result. The operations are those requiring physical manipulations of physical quantities. Usually, though not necessarily, these quantities take the form of electrical or magnetic signals capable of being stored, combined, compared, and otherwise manipulated. It has proven convenient at times, principally for reasons of common usage, to refer to these signals as bits, values, elements, symbols, characters, terms, numbers, or the like. It should be borne in mind, however, that these and similar terms are to be associated with the appropriate physical quantities and are merely convenient labels applied to these quantities. The present disclosure can refer to the action and processes of a computing system, or similar electronic computing device, which manipulates and transforms data represented as physical (electronic) quantities within the computing system's registers and memories into other data similarly represented as physical quantities within the computing system memories or registers or other such information storage systems.

The present disclosure also relates to an apparatus for performing the operations herein. This apparatus can be specially constructed for the intended purposes, or it can include a general-purpose computer selectively activated or reconfigured by a computer program stored in the computer. Such a computer program can be stored in a computer readable storage medium, such as any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, each coupled to a computing system bus.

The algorithms and displays presented herein are not inherently related to any particular computer or other apparatus. Various general-purpose systems can be used with programs in accordance with the teachings herein, or it can prove convenient to construct a more specialized apparatus to perform the methods. The structure for a variety of these systems will appear as set forth in the description herein. In addition, the present disclosure is not described with reference to any particular programming language. It will be appreciated that a variety of programming languages can be used to implement the teachings of the disclosure as described herein.

The present disclosure can be provided as a computer program product, or software, which can include a machine-readable medium having stored thereon instructions, which can be used to program a computing system (or other electronic devices) to perform a process according to the present disclosure. A machine-readable medium includes any mechanism for storing information in a form readable by a machine (e.g., a computer). In some embodiments, a machine-readable (e.g., computer-readable) medium includes a machine (e.g., a computer) readable storage medium such as a read only memory ("ROM"), random access memory ("RAM"), magnetic disk storage media, optical storage media, flash memory components, etc.

While the invention has been described in conjunction with the specific embodiments described herein, it is evident that many alternatives, combinations, modifications and variations are apparent to those skilled in the art. Accordingly, the example embodiments of the invention, as set forth herein are intended to be illustrative only, and not in a limiting sense. Various changes can be made without departing from the spirit and scope of the invention.

## Claims

1. A method, comprising the following steps:
receiving, by a computing system, a sensed position of an operative row of an agricultural implement at a geographic location of a crop field while the agricultural implement moves through the crop field;
matching, by the computing system, the geographic location of the crop field with a location entity of a model for a row position map of the crop field, wherein the location entity corresponds to the geographic location; and
associating, by the computing system, the sensed position of the operative row to the location entity of the model.

2. The method of claim 1, comprising repeating, by the computing system, the steps of claim 1 for a plurality of geographic locations of the crop field.

3. The method of claim 2, comprising rendering, by a mapping application of the computing system, the row position map to be displayed in a graphical user interface, based on the model for the row position map,
wherein the row position map shows at least a plurality of sensed positions of the row at a plurality of location entities of the model corresponding to geographic locations of the crop field where sensing of the plurality of sensed positions of the row occurred.

4. The method of claim 3, comprising rendering, by the mapping application of the computing system, the row position map to be displayed along with a yield map of the crop field; optionally wherein the rendering of the row position map comprises combining the row position map with the yield map; and optionally wherein the combining of the maps comprises the row position map overlapping the yield map, or vice versa.

5. The method of claim 4, wherein the rendering of the row position map comprises rendering the row position map to be positioned adjacent to the yield map.

6. The method of claim 1, wherein the operative row of the agricultural implement is a first operative row of a set of operative rows of the agricultural implement, and wherein the method further comprises the following steps:
receiving, by the computing system, a sensed position of a second operative row of the set of operative rows of the implement at the geographic location of the crop field while the agricultural implement moves through the crop field, at approximately the same time of the receiving of the sensed position of the first operative row of the set of operative rows of the implement;
determining, by the computing system, a position distribution of the set of operative rows of the implement based on the received position of the first operative row and the received position of the second operative row; and
associating, by the computing system, the determined position distribution to the location entity of the model corresponding to the geographic location of the crop field; optionally wherein the determined position distribution comprises respective indications of the sensed position of the first operative row and the second operative row of the set of operative rows of the implement.

7. The method of claim 6, comprising repeating, by the computing system, the steps of claim 6 for a plurality of geographic locations of the crop field.

8. The method of claim 7, comprising rendering, by a mapping application of the computing system, the row position map to be displayed in a graphical user interface, based on the model for the row position map,
wherein the row position map shows at least a plurality of determined position distributions of the set of operative rows of the agricultural implement at a plurality of location entities of the model corresponding to geographic locations of the crop field where sensing of the positions of the first row and the second row of the set of operative rows occurred.

9. The method of claim 6, comprising:
sensing, by a first rotary sensor, the position of the first operative row of the set of operative rows of the agricultural implement at the geographic location of the crop field while the implement moves through the crop field; and
sensing, by a second rotary sensor, the position of the second operative row of the set of operative rows of the implement at the geographic location of the crop field while the implement moves through the crop field.

10. The method of claim 1, comprising:
repeating, by the computing system, the steps of claim 1 for a plurality of geographic locations of the crop field; and
rendering, by a mapping application of the computing system, a topographic map to be displayed in a graphical user interface, based on the model for the row position map and a set of correlations between operative row positions and three-dimensional qualities of a surface of a crop field.

11. The method of claim 10, wherein the topographic map shows the three-dimensional qualities of the surface of the crop field at a plurality of location entities of the model corresponding to geographic locations of the crop field where sensing of the sensed positions of the row occurred; optionally wherein the three-dimensional qualities comprise a plurality of different elevations higher or lower than a baseline elevation of the crop field; and optionally wherein the plurality of different elevations comprise a plurality of heights above sea level.

12. The method of claim 10, comprising rendering, by the mapping application of the computing system, the topographic map to be displayed along with a yield map of the crop field.

13. The method of claim 1, wherein the agricultural implement is a planter, and wherein the method comprises sensing, by a rotary sensor, the position of the row of the agricultural implement at the geographic location of the crop field while the agricultural implement moves through the crop field.

14. A system, comprising a computing device, comprising a processor and a non-transitory computer-readable storage medium for tangibly storing thereon computer program code for execution by the processor, the computer program code comprising:
executable logic executable to receive a sensed position of an operative row of an agricultural implement at a geographic location of a crop field while the agricultural implement moves through the crop field;
executable logic executable to match the geographic location of the crop field with a location entity of a model for a row position map of the crop field, wherein the location entity corresponds to the geographic location; and
executable logic executable to associate the sensed position of the operative row to the location entity of the model.

15. A non-transitory computer-readable storage medium tangibly encoded with computer-executable instructions, that when executed by a processor of a computing device the processor performs a method comprising the following operations:
receiving a sensed position of an operative row of an agricultural implement at a geographic location of a crop field while the agricultural implement moves through the crop field;
matching the geographic location of the crop field with a location entity of a model for a row position map of the crop field, wherein the location entity corresponds to the geographic location; and
associating the sensed position of the operative row to the location entity of the model.
